# EUROPEAN PATENT APPLICATION

(11) **EP 2 782 060 A1**
(43) Date of publication of application: **24.09.2014**
(21) Application number: 13382095.1
(22) Date of filing: 19.03.2013
(51) Int. Cl.: G06Q 30/06

(54) **Purchasing method and system for purchasing by means of two-dimensional graphic codes**

(71) Applicant: Usual Q Smart S.L., 08008 Barcelona (ES)
(72) Inventor: Grau Tomás, José, 08008 Barcelona (ES); Fábregas Tomás, Francisco, Javier, 08008 Barcelona (ES); Vilà Ramos, Andreu, 08008 Barcelona (ES)
(74) Representative: Carpintero Lopez, Francisco

(57) **Abstract**

The present invention relates to a purchasing method and system for purchasing by means of two-dimensional graphic codes which solves the problems of the existing purchasing methods. These two-dimensional graphic codes can be inserted in advertisements. The purchasing process is performed in a quick and secure manner, minimizing the number of connections between the portable device and the external servers, as well as the amount of information exchanged between both.

## Description

### Object of the Invention

The present invention relates to the field of e-commerce, and more specifically to a purchasing method based on two-dimensional graphic codes.

### Background of the Invention

The use of two-dimensional graphic codes coding information into an image, typically a binary image, following various algorithms has become widespread over the recent years. The information contained in these codes can be captured by a portable device through a conventional camera and decoded by means of an application installed in said device. EP 0564708 B1 and WO 2012/098508 A1, for example, relate to a two-dimensional matrix code and a method of decoding two-dimensional codes, respectively. In their most common implementations, the two-dimensional graphic codes have a set of white and black squares coding a bit array. This is the case of the BIDI codes and of the quick response (QR) codes. EP 0672994 B1 relates particularly to QR codes.

The most common application of the two-dimensional graphic codes is to provide a user with quick links to web pages without the user having to manually type out the address of the web page. The purpose thereof is therefore to redirect the user to an external online service, said external service being responsible for providing the service or the information associated with the two-dimensional graphic code captured by the user.

On the other hand, the popularization of web platform-based services has caused a great surge in Internet sale-purchase systems as well as in online service hiring and payment. US 2001/0047307 A1 and AU 2012100182 A4 relate to two examples of the various online sale systems known in the state of the art. These online sale-purchase platforms have benefitted from the ability to redirect the two-dimensional graphic codes by means of including said codes in advertisements such as magazines, newspapers, billboards and advertising posters, electronic displays, etc. In these cases, the two-dimensional graphic codes accompanying the advertisement contain a coded web link, such that when the user captures and decodes them, he/she is redirected to a web page in which the advertised product or service is offered to the user.

Given that all the information necessary for making the product purchase (or service hiring) is provided by the web page through an external server, the user must wait to receive the corresponding information from the server, perform registration processes which involve exchanging several messages with said external server, and finally send a purchase order. This is a slow and inefficient process since it requires sending and receiving several communications through the Internet for making each purchase.

Furthermore, given that the purchase requires the sending of user billing information through internet connection as well as the storage of said billing information in the user's mobile device, there is a risk that the security of the user's information is jeopardized in the event of losing the device or in the event that the internet connection is intercepted by a third party.

Additionally, the systems based on redirecting to online pages or services by means of two-dimensional graphic codes do not allow performing an objective measurement of the effectiveness and the impact of the advertising campaigns, since once the redirecting is performed, the system has no information of which is the advertisement that has prompted the user to make the purchase.

Therefore, there is a need in the state of the art for a purchasing system for purchasing by means of two-dimensional graphic codes wherein the purchasing process is performed in a quick and secure manner, minimizing the number of connections between the portable device and the external servers, as well as the amount of information exchanged between both.

### Description of the Invention

The present invention solves the problems described above by means of an online purchasing system and method based on two-dimensional graphic codes inserted in advertisements, wherein the two-dimensional graphic codes contain all the information required by a user for making a purchase order. The purchase order is then sent to an external server in which the user has already been previously registered. Access to external servers to download information about the products and their purchase options as well as performing individual registrations for each purchase are therefore avoided.

A first aspect of the invention relates to a purchasing method based on two-dimensional graphic codes, comprising the following steps:
- registering a user in an application of a portable device, and sending to an external server a registration message with user identification information, and optionally, the registration of the information of the user billing data in a bank. Prior registration in the external server prevents the user from having to register him/herself during the purchasing process, and from having to enter his/her data independently for each transaction, thus reducing the number of messages necessary for performing each purchase, and the total duration of said purchasing process. In order to increase the system's security, the registration with the bank provides an identifier (an alias) from which the user billing information cannot be deduced and which is stored in a local memory of the application, and is sent to the server together with the subsequent purchase orders. Therefore, the billing information (for example, the credit card number and the verification fields thereof) is stored in the secure servers of the bank, preventing a third party from being able to access all the data in the event of losing the device, or by means of intercepting the communications network connecting the device and the server. Once registered, the user can access the purchasing process provided by the application, typically after identification in the application itself through the interface of the portable device in order to prevent a third party from being able to jeopardize the system's security in the event that he/she obtains access to the device.
- Capturing a two-dimensional graphic code included in an advertisement, (such as for example, a magazine, an advertisement billboard, etc.), promoting a product (or service) that can be acquired by the user. The two-dimensional graphic code comprises coded product information, said coded information being necessary and sufficient for making a product purchase from the application. Therefore, the application in the portable device does not download (nor does it need to download) additional information about the product or about the purchasing process from external servers or from web pages. In other words, the coded information is not a link to a web page or to a server where information for making the purchase can be found.
- Decoding information associated with the product promoted by the advertisement from the captured two-dimensional graphic code. As mentioned, the decoded information is sufficient for making the product purchase from the application, so said application does not access external servers or web pages to obtain additional information about the product or about the purchasing process and payment thereof. The decoded information can typically comprise the price of the product, as well as a brief description thereof. The information decoded from the two-dimensional graphic code preferably also comprises a series of purchase options selectable by the user (such as for example, size or color of clothing, dimensions, number of units, etc.). The decoded information also preferably comprises a validity period for the product information contained in the graphic code (for example, due to a limited time offer), such that the application compares the validity period with the date and hour provided by the portable device, and verifies whether the information is valid.

- Displaying the decoded information to the user through an interface so that the user can make a purchase order based exclusively on the information decoded from the two-dimensional graphic code and without resorting to additional information from the Internet or from other communication networks. In other words, the application does not establish any connection with the server or with any other element connected through the Internet or through other communication networks, from the capturing of the two-dimensional graphic code until the user makes the purchase order, so all the information displayed to said user comes from the two-dimensional graphic code and optionally from the application itself and not from other sources external to the portable device.
- Receiving from the user a purchase order or confirmation for purchasing the offer decoded from the two-dimensional graphic code, indicating, where relevant, the purchase options selected by the user. The purchase order is preferably received by means of a single interaction of the user with the interface of the portable device (for example, by pushing a key, or a touch screen of the device). That is possible as a result of the fact that the user has already been previously registered and that the two-dimensional graphic code comprises all the information about the product necessary for making the purchase. In the event that the user needs to select several options about the product and requires more interactions with the interface of the portable device, the number of said interactions remains fewer than in a conventional purchasing process with the methods known in the state of the art.
- Sending a purchase message to the external server in which the user has already been registered, indicating in said message the user's identity, as well as the product to be acquired, and the selected options if any. Given that all the product information needed for the user to make the purchase order and for the application to generate the corresponding purchase message is coded in the two-dimensional graphic code, the need of downloading product information from an external server is avoided, the number of messages necessary for completing the transaction and the time thereof being reduced. The purchase message is preferably the only communication exchanged between the application and the server from reading the two-dimensional code until making the product purchase the information of which is contained in said two-dimensional code. That is possible as a result of the prior registration of the user and of the fact that all the information necessary for making the purchase is coded in the two-dimensional graphic code, so the application does not need to establish communications with the server to request additional information. The required time and the data stream necessary for making a purchase are therefore minimized, making the process easier for the user and encouraging impulse purchase.

- The purchase messages also preferably include user geopositioning information, such as for example, position coordinates provided by a global positioning system (GPS). This allows performing detailed studies on the impact and the effectiveness of the advertising campaigns comprising the advertisements from which the user has captured the two-dimensional graphic code.
- In the preferred case in which the server has the partial user billing information, the purchase message comprises the remaining billing information required by the server to perform the transaction. This allows increasing the system's security, preventing a third party from accessing all the billing information in the event of losing the portable device or the portable device being stolen, or the messages being intercepted in the communications network.
- When the server receives the purchase message, it proceeds with said purchase directly without needing to request additional information from the application. In other words, the server preferably does not establish additional communications with the application from the moment in which it receives the purchase message until the moment in which the purchase has been made and paid for. In one embodiment, it is the server itself that performs the economic transaction associated with the product purchase, therefore speeding up said transaction since there is not a need to resort to external services or providers in order to manage same. During the purchasing process and payment in the server, i.e., from when the server receives the purchase message until the economic transaction ends, the server does not exchange any communication with the portable device housing the application, since it has all the user payment data from the register and from the purchase message. This allows increasing the speed of the process from receiving the purchase order until the end of purchase and payment, turning it into in a quick and immediate process that does not require user intervention.
- The process preferably comprises sharing the information decoded from the two-dimensional graphic code with one or more contacts from a contact list comprised in the portable device in which the application is installed. To that end, the application sends a suggestion message to several contacts selected by the user, in which the decoded product information is included. The contact who receives said message can therefore send a purchase order from his/her application to the server, using only the information shared in the suggestion message, as if it is the contact him/herself that captures the two-dimensional graphic code in his/her own terminal.

A second aspect of the invention relates to a purchasing system for purchasing by means of two-dimensional graphic codes based on an application that can be installed in a portable device, such as for example, a mobile telephone, a PDA (Personal Digital Assistant), or a tablet. The portable device in which the application installed must comprise image capturing means, such as a photographic and/or video camera, an interface through which the user can receive information and enter commands, and connection means which allow establishing data communications with an external server through a communications network.

Before starting the purchasing process, the application is configured for registering the user, sending a registration message comprising user identification information, and typically billing and delivery data, as well as personal data of the user, to the external server.

Once the user is successfully registered in the system, the application is configured for capturing a two-dimensional graphic code inserted in an advertisement and for decoding information about a product (or service) associated with the advertisement from said graphic code. Said decoded information comprises all the data required by the user and the application for making the product purchase (such as for example, product identifier, price thereof, selectable characteristics, etc.), so it is not necessary to establish communications between the application and the server for receiving additional information about said product.

The application is configured for displaying the decoded information to the user through the interface of the portable device, and for receiving from said user a purchase order, establishing that the user wants to acquire the offered product. In other words, capturing the two-dimensional code, decoding the product information, and presenting the decoded information to the user are performed without the application accessing external servers or web pages, since all the information displayed to the user is coded in the two-dimensional graphic code.

Once the user has confirmed that he/she wants to make the purchase, and where relevant, has indicated the corresponding purchase options, the application generates a purchase message which is sent to the server. Given that all the product information has been directly provided through the two-dimensional graphic code, the purchase message comprises the user identification, an identification of the product to be purchased, as well as, if necessary, any user's choice with respect to the provided purchase options.

The purchase messages preferably also include user geopositioning information, such as for example, position coordinates provided by geopositioning means comprised in the portable device (for example, a GPS). The geopositioning information can be used for performing studies on the impact of the advertisement in which the two-dimensional graphic codes are included.

The server of the system is preferably configured for processing the purchase indicated in the purchase message sent by the application, as well as for performing the corresponding economic transaction, without establishing additional communications with said application from the moment of receiving the purchase message until the end of the purchase and payment. All the information about the product and its selectable characteristics required by the server for making the purchase are comprised in the purchase message, whereas the billing and delivery information is communicated thereto either during the prior registration process or as part of the purchase message itself. This allows the system to make the product purchase and payment with a single interaction between the application and the server from which the user captures the two-dimensional graphic code until the purchase becomes effective. The product purchase and payment are therefore quick and immediate and do not require user intervention once said user makes the purchase order.

The application preferably comprises a local memory in which it stores historical information of the transactions and queries made by the user. This allows the user to access the list of products that he/she has bought and made a query of, and it allows the service provider to obtain information about the behavior of said user with respect to said purchases.

The server also preferably comprises a register in which it stores user activity information, i.e., information about the products queried and/or bought by the user by means of reading the two-dimensional graphic codes.

A third aspect of the present invention relates to a computer program comprising computer program coding means suitable for implementing the described method by being run in a computer, a digital signal processor, an integrated circuit specific for the application, a microprocessor, a microcontroller or any other form of programmable hardware.

The described system, method, and computer program therefore provide a purchasing tool based on two-dimensional graphic codes which minimizes the number of communications established between the application of the mobile device and the external server, as well as the duration and amount of data thereof. Given that all the information necessary for making the purchase is contained in the two-dimensional graphic code and that the user is already registered in the server when he/she makes the purchase, the system processes the purchase (including the payment thereof) with the sending of a single message from the application to the server, and without requiring any communication from the server to said application.

The number of interactions required for the user to complete the purchasing process is thus reduced, being able to be limited to only one command (for example, by pushing a button) in the event that it is not necessary to choose any option of the product characteristics. Even in cases where selecting characteristics or an identification process to prevent a third party from using the application is required, the need of entering personal data, billing and delivery data is prevented, reducing the purchasing time and favoring impulse purchase.

The security of billing data (card number, etc.) is also assured in the event of losing the portable device or the portable device being stolen, or the purchase messages being intercepted in the communications network. Additionally, a powerful tool is provided for objectively measuring the effectiveness and impact of the advertising campaigns involved in the purchasing process, also allowing the analysis of the geographical distribution of the users who purchase the product offered by said campaign, or the positions of the most effective advertisements.

Finally, the invention allows comparing the queried product information with other user contacts, which can in turn acquire the product in a fast and efficient manner and share it with their own contacts, thus increasing the reach of the advertising campaign in which the two-dimensional graphic codes are introduced.

These and other advantages of the invention will become apparent in view of the detailed description thereof.

### Description of the Drawings

For the purpose of aiding to better understand the features of the invention according to a preferred practical embodiment thereof and for complementing this description, the following illustrative and non-limiting drawings are attached as an integral part of said description:
Figure 1 shows a scheme of the system of the invention according to a particular implementation thereof, as well as a two-dimensional graphic code, a device and a communications network involved in the online purchasing process.
Figure 2 shows a flow diagram according to a particular implementation of the purchasing method of the invention.

### Preferred Embodiment of the Invention

In this text, the term "comprises" and its derivations (such as "comprising", etc.) must not be interpreted in an excluding manner, i.e., these terms must not be interpreted as excluding the possibility that what is described and defined may include other elements, steps, etc.

Likewise, in this text, the term "product" must be understood in the broadest commercial sense, including not only tangible products, but any service involving an economic transaction.

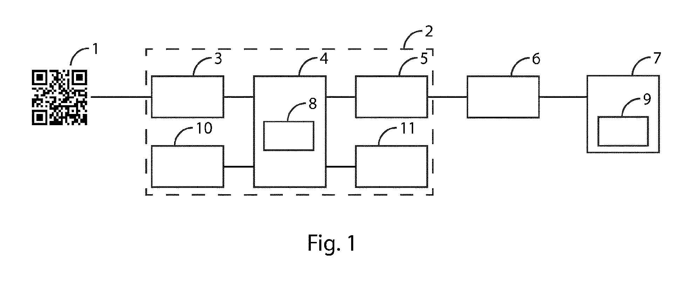

Figure 1 shows a scheme of a preferred embodiment of the system of the invention which in turn performs the steps of a preferred embodiment of the method of the invention. The system comprises an application (4) that is installed in a portable device (2), such as a mobile telephone, a PDA, a tablet, a portable computer, etc. The portable device in turn comprises image capturing means (3), an interface (10), a geopositioning system (11) and connection means (5). The image capturing means (3) are typically a photographic or video camera, but can also include computer programs suitable for capturing a two-dimensional graphic code (1) from an image or a data file contained in the portable device (2). The interface (10) can be any system which allows displaying information to the user and receiving commands from same, such as a screen and a keypad, or a touch screen. The geopositioning means (11) can be based on any spatial localization technique, such as GPS, for example.

The connection means (5) allow connecting the portable device (2) to a communications network (6), such as the Internet, for example. An external server (7) managing the purchasing operations requested by the user through the application (4), as well as the economical transactions associated with said purchases, is also connected to said communications network. In order to store, both locally and remotely, historical data about user purchase and query operations, the application (4) comprises a local memory (8), and the external server (7) comprises a register (9).

Once the application (4) is installed in the portable device (2), the application requests the user to register. Typically, said registration comprises entering a series of personal data, billing and delivery data of the user, as well as creating identification data, such as name and password, for example, which allow authenticating the user in subsequent uses of the application (4). The identification information is sent in a registration message to the server (7), typically accompanied by any additional information entered by the user. It must be noted that any information necessary for completing a purchase (for example, the product delivery address) which has not been sent in the registration message, is sent from the application (4) to the server (7) in subsequent purchase messages.

Particularly, to prevent the billing information (typically consisting of card number and verification fields of said card) from being saved entirely in the portable device (2), or from being sent entirely in one and the same communication with the server (7), the application (4) sends part of said billing information in the registration message and the rest of said billing information in the purchase message. For example, the registration message can contain a call to the server of a bank to activate the card, and the purchase message can contain the card identifier provided by the bank without any direct relationship with the information thereof.

Once the user is registered in the server (7), he/she can make purchases through the application (4) by means of capturing two-dimensional graphic codes (1) included in advertisements. Said two-dimensional graphic codes (1) can be implemented, for example, by means of QR codes. The QR codes used in the present invention comprise coded product information offered in the advertisement, said coded information being sufficient so that the user can make a purchase of said product without receiving additional information from other external elements such as servers or web pages. Typically, said product information includes product description and/or name, and the price thereof. Likewise, it can include, for example, the manufacturer name, the marketing company name, product identification codes, identification codes of the corresponding advertising campaign, etc.

The two-dimensional graphic code (1) can also comprise coded information about the purchase options of said product, such as for example, the color and size of a clothing, dimensions, design options, etc. To that end, the two-dimensional graphic code (1) can comprise a name or label of the characteristics to be chosen, as well as the different options available for said characteristics.

The two-dimensional graphic code (1) can also comprise coded fields in which, the time interval in which the offer provided by the two-dimensional graphic code (1) is valid, is indicated. Said interval can be indicated, for example, by means of the start and end date and time of the campaign.

Other information that can be included in the two-dimensional graphic code (1) for those devices which have not installed the application (4) is a link with additional product information (it must be noted that the query of said link by the user is optional, and it is not necessary in order to proceed with product purchase), a link to a web page of the provider of the online purchasing service. Likewise, it is possible to indicate the codes or characteristics of the advertising medium in which the two-dimensional graphic code (1) is included to allow measuring the impact of each advertising campaign.

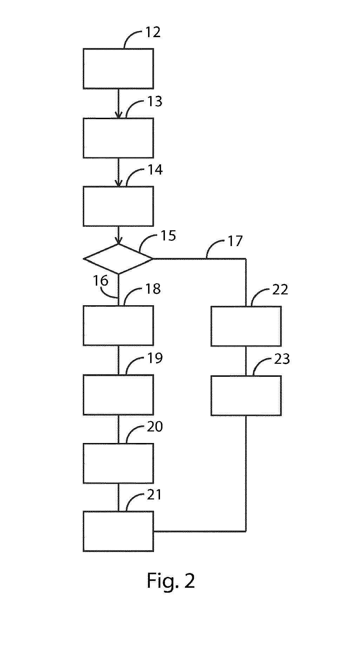

The purchasing process starting from a two-dimensional graphic code (1) is shown in Figure 2. Said purchasing process starts with the capturing (12) and decoding of a two-dimensional graphic code through the image capturing means (3). The application then obtains geopositioning information (13) from the geopositioning means (11) of the portable device (2), thus allowing geographically locating the user and determining the impact of the advertising campaign by locations.

Next, the application (4) displays (14) in the interface (10) the product information decoded from the two-dimensional graphic code (1) and checks whether said product information is valid (15), depending on the validity period of the offer and on the moment in which the reading of the two-dimensional graphic code (1) is performed.

If the offer is not valid (17), the application (4) shows an error message (22). In this case, like in the event where the user decides to not purchase a product the two-dimensional graphic code (1) of which has been captured, the application (4) sends (23) to the server a message with an identification of the queried product, the geopositioning information, and any additional information about the user (for example, the date of birth) or about the advertising campaign (for example, the communication means in which the code is read). This information can be used to objectively assess the impact of the advertising campaigns.

If the offer is indeed valid (16), the user enters any additional information requested by the application (4) and validates (18) the purchase. It must be noted that in the event that no additional information is needed and that the user wants to purchase the number of units of product appearing by default in the application (typically one), the purchase validation by the user is performed with a single command by said user (for example, by pushing a key or a point in a touch screen). The additional information typically comprises the user's selection with respect to the selectable characteristics of the product (size, color, dimension, units, etc.) coded in the two-dimensional graphic code (1), and therefore does not require establishing additional communications with the server or with other external elements, nor does it require establishing additional interactions with the user other than the selection of said characteristics. In order to prevent a third party with access to the portable device (2) from using the application (4), it can ask the user to identify himself/herself before making the purchase either when starting the application or during the validation of the purchase order.

It must be noted that the capturing and decoding of the two-dimensional graphic code (1), the presentation of the decoded information to the user, and the generation of the purchase message are performed without establishing communications through the Internet or other communication networks with external servers or web pages, since all the necessary information about the product is coded in the two-dimensional graphic code (1). In other words, the information displayed to the user, and with which the purchase order is made, is exclusively information decoded from the two-dimensional graphic code (1) to which information previously stored in the application itself in the portable device can optionally be added.

Once the purchase order is validated, the application (4) generates a purchase message and sends said purchase message (19) to the server (7) through the connection means (5) and the communications network (6). The purchase message comprises a user identifier, an identification of the product or service to be purchased, the characteristics selected by the user, and typically, the number of units to be acquired, and the corresponding geopositioning information. The purchase message can include any additional information, such as the codes or characteristics of the advertising medium decoded from the two-dimensional graphic code (1), for example.

It must be noted that all the information necessary for displaying the data of the product and the selectable characteristics thereof to the user, as well as for generating the message with the purchase order, is contained in the two-dimensional graphic code (1), so it is not necessary to establish external connections or to download content from servers in order to make the purchase. The purchase is therefore made by means of a single communication coming from the application (4) transmitted to the server (7), and without said application (4) receiving product information from the server (7) by means of additional communications. In other words, only one interaction between the application (4) and the server (7) is necessary for purchasing the product offered in the two-dimensional graphic code (1).

Ultimately, the described method and system allow the user to make purchases with a single command (for example, by pushing a single key, or with a single click), and with a single interaction with the server. The waiting time, the number of data communications and data traffic existing between viewing the advertisement and making the purchase is thus minimized.

Once the server (7) receives the purchase message, it proceeds to verify the validity of the offer and to manage the product purchase. In one embodiment, the server (7) itself manages the economic transaction associated with the purchase without resorting to external services, by means of transaction means programmed for said purpose. Starting from the time in which the server (7) receives the purchase message sent by the application (4) and until the time in which said server (7) ends the product purchase and payment, no communication whatsoever is established between the server (7) and the application. Given that all the information that the server (7) needs for managing the purchase and payment is provided during the registration and in the purchase message, the server does not require any interaction with the user during the product purchase and payment processes. The time and the number of connections necessary for making product purchase and payment, which are performed in a fast and immediate manner, are thus reduced. Typically, the time that lapses since the user makes the purchase order until the end of the product purchase and payment is less than 10-15 seconds, even being able to be less than 5 seconds. Additionally, the server (7) stores the data of the order in its register (9) and manages any delivery that is to be performed.

Once the transaction is performed, the application (4) receives a confirmation (20) from the server (7) indicating whether the purchase has been performed successfully, or in contrast, an error has occurred. After receiving the confirmation (20), the application stores the data of the purchase in its local memory (8), and finishes (21) the process. Said storage in the local memory (8) can also be performed if the user decides to not purchase a queried product. It must be noted that the confirmation message is after the purchasing process, and therefore does not involve additional connections or delays between the moment in which the user sees the advertisement and the moment in which the transaction is performed.

In order to increase the impact of the advertisement in which the two-dimensional graphic code (1) is included, and to achieve a multiplier effect thereof, the application (4) provides the possibility of sharing the product information decoded from said two-dimensional graphic code (1) with the user's contacts and recommending them to purchase same. In a preferred implementation of said recommendation service, after viewing the product information, the user selects an option to forward the read advertisement to one or more contacts from the contact list of the portable device (2). To that end, all contacts having an e-mail address are shown to the user. The user then selects the contacts to whom he/she wants to send the product information. The advertisement is sent by the application (4) to the selected contacts by means of an e-mail comprising an identifier of the advertisement decoded from the two-dimensional graphic code (1), as well as any other additional information decoded from the two-dimensional graphic code (1). The e-mail can be sent through the communications network (6) or through any other connection accessible by the portable device (2).

When one of the contacts receives the e-mail with the link in his/her terminal, the application (4) opens up automatically and shows the information received in said e-mail. Since the received information corresponds with the information decoded from the two-dimensional graphic code (1), said received information is sufficient to make a purchase order from the terminal of the contact without establishing any connection with the server to obtain product information. Therefore, the contact can proceed with the purchase as if it is him/herself that captured the two-dimensional graphic code (1), i.e., sending a purchase message from the application (4) to the server (7) using only the information of the two-dimensional graphic code (1).

Nevertheless, the contact who receives the suggestion message can request the server (7) for additional information if he/she considers it necessary, using to that end the identifier comprised in the link. In the event that a user who receives a recommendation from his/her contacts does not have the application (4) in his/her terminal, said user can access a page from which said application (4) can be downloaded through web terminal. The link of the web page from which the application (4) is downloaded is preferably contained in the e-mail in which the recommendation is sent.

In turn, each user who receives an advertisement through a recommendation message from a contact can again forward said advertisement to other contacts, thus increasing the effect of the advertising campaigns. It must be further noted that the recommendation process is not limited to e-mails, but rather can be implemented with any other messaging system, social networks, etc.

In view of this description and drawings, the person skilled in the art will understand that the invention has been described according to several preferred embodiments thereof, but multiple variations can be introduced in said preferred embodiments without exceeding the object of the claimed invention.

## Claims

1. Purchasing method for purchasing a product associated with an advertisement by means of two-dimensional graphic codes (1), **characterized in that** it comprises:
- registering a user in an application (4) of a portable device (2) and sending a user registration message from the application (2) to a server (7) through connection means (5), said registration message comprising information for identifying and billing the user;
- capturing (12) through image capturing means (3) of the portable device (2) a two-dimensional graphic code (1) located in the advertisement, the two-dimensional graphic code (1) containing coded information about the product associated with the advertisement, and the step of capturing the two-dimensional graphic code (1) being after the step of sending the user registration message;
- decoding said information about the product associated with the advertisement from the captured two-dimensional graphic code (1) and displaying through an interface (10) of the portable device (2) said decoded information, said decoded information comprising at least one product identifier;
- receiving through the interface (10) a purchase order (18) from the user based on the decoded information;
- and sending a purchase message (19) to the server (7) through the connection means (5), said purchase message comprising a user identification and the product identifier comprised in the decoded information.

2. Method according to claim 1, **characterized in that** it comprises:
- making the purchase indicated by the purchase message sent from the application (4) by means of the server (7), without the server (7) and the application (4) from which the server (7) receives the purchase message exchanging additional messages until the server (7) finishes making the purchase,
- and managing in the server (7) a payment for the purchase indicated by said purchase message, without the server (7) and the application (4) from which the server (7) receives the purchase message exchanging additional messages until the server (7) finishes managing the payment.

3. Method according to any of the preceding claims, **characterized in that** the step of receiving the purchase order (18) from the user consists of receiving a single command from the user through the interface (10).

4. Method according to any of the preceding claims, **characterized in that** the method comprises exchanging a single message between the application (4) and the server (7) from the capturing of the two-dimensional graphic code (1) until making the product purchase.

5. Method according to any of the preceding claims, **characterized in that**:
- the step of registering the user in the application comprises storing in a local memory (8) a first partial user billing information
- the step of sending a registration message comprises sending in the registration message a second partial user billing information;
- and the step of sending the purchase message (19) comprises sending the first partial user billing information.

6. Method according to any of the preceding claims, **characterized in that** it comprises:
- decoding at least one product purchase option from the two-dimensional graphic code (1);
- receiving from the user a selection relating to said at least one product purchase option;
- sending the user's selection in the purchase message (19).

7. Method according to any of the preceding claims, **characterized in that** it comprises sending in the purchase message geopositioning information (13) provided by geopositioning means (11).

8. Method according to any of the preceding claims, **characterized in that** it further comprises:
- decoding a product information validity date from the two-dimensional graphic code (1);
- and checking whether the product information is valid (15) according to said validity date;

9. Method according to any of the preceding claims, **characterized in that** it comprises sending from the application (4) a recommendation message to at least one contact from a contact list stored in the portable device (2), said recommendation message comprising the product information decoded from the two-dimensional graphic code (1).

10. Purchasing system for purchasing by means of two-dimensional graphic codes (1) comprising an application (4) suitable for being installed in a mobile device (2), said mobile device comprising image capturing means (3), connection means (5) suitable for being connected to a server (7) through a communications network (6), and an interface (10) suitable for displaying information to a user and receiving commands from said user;
**characterized in that** the application (4) is configured for:
- registering the user in the application (4) and sending a user registration message to the server (7) through the connection means (5), said registration message comprising information for identifying said user;
- capturing (12) through the image capturing means (3) a two-dimensional graphic code (1) located in an advertisement, the two-dimensional graphic code (1) containing coded information about the product associated with the advertisement, and the two-dimensional graphic code (1) being captured after the user registration message is sent;
- decoding said information about the product associated with the advertisement from the captured two-dimensional graphic code (1) and displaying through an interface (10) of the portable device (2) said decoded information, said decoded information comprising at least one product identifier;
- receiving through the interface (10) a purchase order (18) from the user based on the decoded information;
- and sending a purchase message (19) to the server (7) through the connection means (5), said purchase message comprising a user identification and the product identifier comprised in the decoded information.

11. System according to claim 10, **characterized in that** the system comprises a server (7) configured for receiving the purchase message (19) from the application and managing a payment for a purchase indicated by said purchase message, without the server (7) and the application (4) from which the server (7) receives the purchase message exchanging additional messages until the server (7) finishes managing the payment.

12. System according to any of claims 10 and 11, **characterized in that** the application comprises a local memory (8) configured for storing user activity information.

13. System according to any of claims 10 to 12, **characterized in that** the server (7) comprises a register (9) configured for storing user activity information.

14. System according to any of claims 11 to 13, **characterized in that** the device (2) comprises geopositioning measuring means (11) and **in that** the application (4) is configured for sending in the purchase message geopositioning information (13) provided by the geopositioning means (11).

15. Computer program comprising computer program coding means suitable for performing the steps of the method according to any of claims 1 to 9, when the mentioned program is run in a computer, a digital signal processor, an integrated circuit specific for the application, a microprocessor, a microcontroller or any other form of programmable hardware.
